# EUROPEAN PATENT APPLICATION

(11) **EP 2 023 633 A1**
(43) Date of publication of application: **11.02.2009**
(21) Application number: 07744350.5
(22) Date of filing: 29.05.2007
(51) Int. Cl.: H04N 7/173, H04N 5/44, H04N 5/76

(54) **BROADCAST RECEPTION DEVICE**

(30) Priority: 30.05.2006 JP 2006149102
(71) Applicant: Panasonic Corporation, Kadoma-shi Osaka 571-8501 (JP)
(72) Inventor: IMURA, Atsushi Panasonic Corperations, Osaka-Shi, Osaka, 540-6207 (JP)
(74) Representative: TBK-Patent
(86) International application number: PCT/JP2007/060931
(87) International publication number: WO 2007/139121

(57) **Abstract**

When a user is viewing a preview program, a preview program information extractor extracts preview program information from program information outputted from a receiver. The preview program information storage stores the preview program information. The preview program data storage stores preview program data outputted from the receiver. The user can display a list of viewing/recording reservation enabled programs on a screen of a monitor by operating an information input unit. When the user gives an instruction to reserve a program, the program reservation setter stores reservation information inputted by operating the information input unit in a reservation information storage. This causes viewing or recording to be reserved.

## Description

### [Technical Field]

The present invention relates to a broadcasting receiving apparatus having a program reservation function.

### [Background Art]

In digital broad casting, users must select desired programs from a great many channels. In order to alleviate difficulties in such program selection, electronic program guides (EPGs) for displaying broadcasting program listings on screens of television receivers and genre retrieval functions allowing programs to be retrieved according to genres have been introduced, to enhance users' conveniences.

Even when the electronic program guides are employed, however, all programs cannot be collectively displayed on the screens of the television receivers. Furthermore,itisdifficult to intuitively grasp the contents of the programs from the electronic program guides. On the other hand, even if the genre retrieval functions are utilized, the detailed contents of the programs cannot be simply grasped. Therefore, the users may, in some cases, miss the programs of interest even if they utilize the electronic program guides or the genre retrieval functions.

On the other hand, in order to preannounce or advertise programs that will be broadcasted, the broadcasting stations are broadcasting commercial messages of program previews in which the programs are condensed (hereinafter referred to as preview programs). The users store, when they watch the preview programs to find the programs of interest, the programs in memos and others, and search the electronic program guides for the stored programs at later dates, to perform operations for reserving viewing or recording.

However, it is very troublesome for the users to thus store the contents of the preview programs and separately perform operations for reserving the programs. The users may not be able to perform the operations for reserving the programs because they forget the titles of the programs or the times when the programs start in many cases.

Therefore, digital broadcasting receiving apparatuses allowing users to immediately reserve recording of programs preannounced and advertised (hereinafter referred to as mainview programs) with remote controls while viewing preview programs (see, for example, Patent Document 1 and Patent Document 2).

Furthermore, reservation processing methods for recording and displaying preview data for designating mainview data while reserving recording or output of the mainview data on the basis of operations for the preview data have been proposed (see Patent Document 3).
[Patent Document 1] JP 63-92177 A
[Patent Document 2] JP 2001-257953 A
[Patent Document 3] JP 11-252492 A

### [Disclosure of the Invention]

### [Problems to be Solved by the Invention]

However, almost all of preview programs are condensed into a short time period such as 15 seconds. Therefore, it is very difficult to immediately performan operation for reserving viewing or recording within a time period during which a user is viewing the preview program.

Even if the reservation can be registered only by depressing a reservation switch in a remote control, as disclosed in Patent Document 1 and Patent Document 2, it is almost impossible to depress the reservation switch by immediately picking up the remote control when the user is watching a television broadcast while cooking in a kitchen, for example.

Furthermore, it is not easy to search preview data for a desired program, as in the reservation processing method disclosed in Patent Document 3.

### [Means for Solving the Problems]

An object of the prevent invention is to provide a broadcasting receiving apparatus capable of simply and reliably reserving viewing or recording of a mainview program even if a preview program ends.
(1) In accordance with an aspect of the present invention, a broadcasting receiving apparatus that receives a broadcasting signal including program information relating to a mainview program preannounced by a preview program includes a tuner that tunes in to the preview program or the mainview program, an information extractor that extracts program information relating to the mainview program from a broadcasting signal for the preview program while the tuner is tuning into the preview program, a program information storage that stores the program information extracted by the information extractor, a display controller that displays the program information stored in the program information storage on a screen on the basis of an instruction from a user, and a reservation setter that sets the reservation of the mainview program selected by the user on the basis of the program information displayed on the screen.
   In the broadcasting receiving apparatus, the information extractor extracts the program information relating to the mainview program from the broadcasting signal for the preview program while the tuner is tuning in to the preview program. The extracted program information is stored in the program information storage. Thereafter, the display controller displays the program information stored in the program information storage on the screen on the basis of the instruction from the user, and the reservation setter sets the reservation of the mainview program selected by the user on the basis of the program information displayed on the screen.
   When the user is thus viewing the preview program, the program information relating to the mainview program extracted from the broadcasting signal for the preview program is stored. Since the user grasps the contents of the mainview program by the preview program, he/she can easily select the mainview program while seeing the program information displayed on the screen even if the preview program ends. This makes it possible to simply and reliably reserve viewing or recording of the mainview program.
(2) The display controller may display the program information stored in the program information storage as a list on the screen, and the reservation setter may set the reservation of the mainview program on the basis of the program information selected by the user from the program information displayed as a list on the screen.
   In this case, the user can select the mainview program while seeing the program information displayed as a list on the screen even if the preview program ends. This makes it possible to more simply and reliably reserve viewing or recording of the mainview program.
(3) The broadcasting receiving apparatus may further include a data extractor that extracts program data including the content of the preview program from the broadcasting signal for the preview program, and a first data storage that stores the program data extracted by the data extractor, in which the display controller displays the program data stored in the first data storage as a video of a still image or a moving image on the screen on the basis of the instruction from the user.
   In this case, the data extractor extracts the program data including the content of the preview program from the broadcasting signal for the preview program. The extracted program data is stored in the first data storage. Thereafter, the display controller displays the program data stored in the first data storage as the video of the still image or the moving image on the screen on the basis of the instruction from the user.
   Therefore, the user can select the mainview program while seeing the video of the still image or the moving image of the preview program displayed on the screen. This makes it possible to more simply and reliably reserve viewing or recording of the mainview program.
(4) The display controller may display a video in the preview program corresponding to a predetermined time period on the screen on the basis of the program data stored in the first data storage.
   In this case, the user can select the mainview program while seeing the video in the preview program corresponding to the predetermined time period displayed on the screen. This makes it possible to more simply and reliably reserve viewing or recording of the mainview program.
(5) The display controller may thumbnail the video in the preview program on the screen on the basis of the program data stored in the first data storage.
   In this case, the user can select the mainview program while seeing the video in the preview program thumbnailed on the screen. This makes it possible to more simply and reliably reserve viewing or recording of the mainview program.
(6) The broadcasting receiving apparatus may further include a reservation information storage that stores reservation information representing the contents of the reservation setting by the reservation setter, in which the display controller may display the reservation information stored in the reservation information storage on the screen on the basis of the instruction from the user.
   In this case, the user can easily confirm the contents of the reservation setting by seeing the reservation information displayed on the screen.
(7) The tuner may tune in to the mainview program on the basis of the reservation setting by the reservation setter.
   In this case, the mainview program is tuned in to on the basis of the reservation setting, which allows themainviewprogram to be viewed or recorded.
(8) The broadcasting receiving apparatus may further include an output unit that outputs program data including the content of the mainview program tuned in to by the tuner.
   In this case, the program data including the content of the mainview program tuned in to is outputted, which allows the mainview program to be viewed.
(9) The broadcasting receiving apparatus may further include a second data storage that stores program data including the content of the mainview program tuned in to by the tuner.
   In this case, the program data including the content of themainviewprogramtunedinto is stored, whichcauses themainview program to be recorded.
(10) The broadcasting receiving apparatus may further include a content acquisition unit that is connected to a server storing the content of the main view program and acquires the content of the mainview program from the server on the basis of the reservation setting by the reservation setter.
   In this case, the content of themainviewprogramis acquired from the server on the basis of the reservation setting, which allows the mainview program to be viewed or recorded.
(11) The program information relating to the mainview program may include a reservation enabled time period for the mainview program. The broadcasting receiving apparatus may further include a time acquisition unit that acquires a reservation enabled time period from the program information extracted by the information extractor, and a time storage that stores the reservation enabled time period acquired by the time acquisition unit, in which the reservation setter may set the reservation of the mainview program when an instruction to set the reservation of the mainview program by the user is given within the reservation enabled time period stored in the time storage.
   In this case, the reservation of the mainview program is set when the user gives the instruction to set the reservation of the main view program within the reservation enabled time period.
(12) The broadcasting receiving apparatus may further include an eraser that erases the program information stored in the program information storage when the current time is just after the reservation enabled time period stored in the time storage.

In this case, the program information stored in the program information storage is erased when the current time is just after the reservation enabled time period, which prevents the program information relating to the mainview program that cannot be reserved from being stored in the program information storage.

### [Effects of the Invention]

According to the present invention, when the user is viewing the preview program, the program information relating to the mainview program extracted from the broadcasting signal for the preview program is stored. Since the user grasps the contents of the mainview program by the preview program, he/she can easily select the mainview program while seeing the program information displayed on the screen even if the preview program ends. This makes it possible to simply and reliably reserve viewing or recording of the mainview program.

### [Brief Description of the Drawings]

[FIG. 1] FIG. 1 is a block diagram mainly showing the configuration of a broadcasting receiving apparatus according to an embodiment of the present invention.
[FIG. 2] Fig. 2 is a diagram showing an example of program information.
[FIG. 3] FIG. 3 is a flow chart showing the operation of the broadcasting receiving apparatus shown in Fig. 1.
[FIG. 4] FIG. 4 is a diagram showing a list of viewing/recording reservation enabled programs displayed on a screen of a monitor.
[FIG. 5] FIG. 5 is a diagram showing a list of reserved programs displayed on a screen of a monitor.

### [Best Mode for Carrying out the Invention]

The embodiments of the present invention will be described in detail referring to the drawings. Theembodimentsbelowdescribe a broadcasting receiving apparatus.

Here, a commercial message in which the program is condensed for preannouncing and advertising a program scheduled to be broadcast is referred to as a preview program. Furthermore, a program preannounced and advertised by the preview program is referred to as a mainview program.

### (1) Configuration of broadcasting receiving apparatus

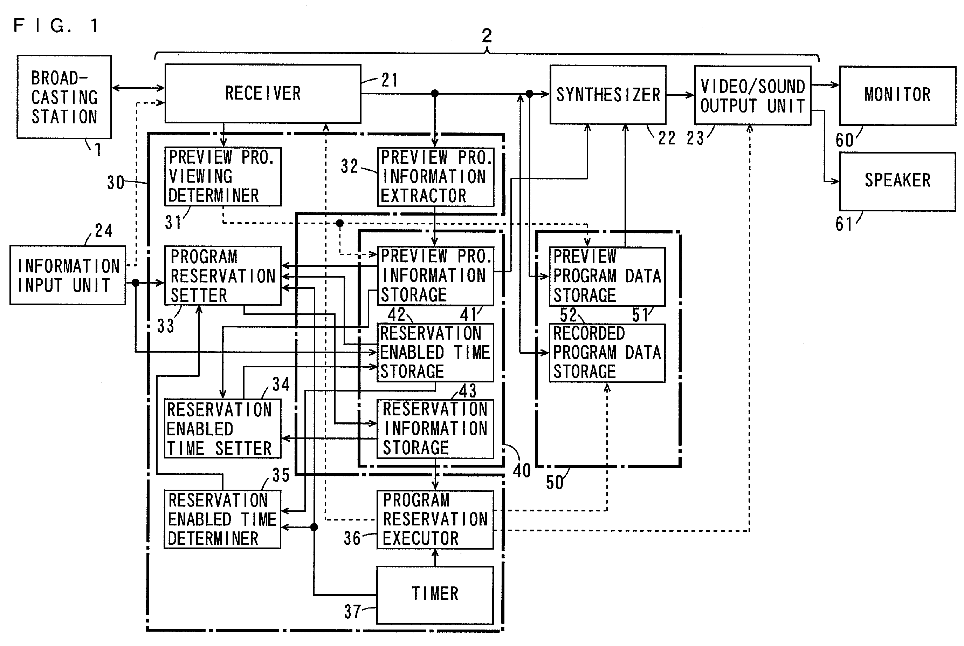

Fig. 1 is a block diagram mainly showing the configuration of a program receiving apparatus according to an embodiment of the present invention.

In Fig. 1, a broadcasting receiving apparatus 2 includes a receiver 21, a synthesizer 22, a video/sound output unit 23, a controller 30, a first storage 40, and a second storage 50. A monitor 60 and a speaker 61 are connected to the video/sound output unit 23.

The broadcasting receiving apparatus 2 is a television receiver,a set top box (STB), or the like that receives a broad casting signal from a broadcasting medium such as terrestrial digital broadcasting,terrestrialanalogbroadcasting,satellite digital broadcasting, satellite analog broadcasting, cable television (CATV) broadcasting, or Internet broadcasting.

The controller 30 includes a preview program viewing determiner 31, a preview program information extractor 32, a program reservation setter 33, a reservation enabled time setter 34, a reservation enabled time determiner 35, a program reservation executer 36, and a timer 37. The function of each of the units in the controller 30 is realized by a CPU (Central Processing Unit) and a program.

The first storage 40 includes apreviewprograminformation storage 41, a reservation enabled time storage 42, and a reservation information storage 43. The first storage 40 is composed of a recording medium such as a hard disk, a DVD (Digital Versatile Disc), or a semiconductor memory.

The second storage 50 includes a preview program data storage 51 and a recorded program data storage 52. The second storage 50 is composed of a recordingmedium such as a semiconductor memory, a hard disk, or a DVD.

The receiver 21 receives a broadcasting signal transmitted from a broad casting station 1, tunes into, demodulates, and decodes the broadcasting signal, and outputs program data and program information.

Here, the program data includes a video signal and a sound signal that constitute the content of each of programs. Particularly, program data relating to a preview program is referred to as preview program data, and program data relating to a mainview program is referred to as mainview program data. The program information is provided using an EIT (Event Information Table) that is one of SI (Service Information) or PSI (Program Specific Information), for example. An example of the program information will be described later.

Furthermore, the receiver 21 is connected to a server in the broadcasting station 1 via an IP (Internet Protocol) network, for example, and can establish bidirectional communication with the server. The server in the broadcasting station 1 stores the content of a broadcasting program.

The synthesizer 22 selectively outputs the program data given from the receiver 21, the preview program data storage 51, or the recorded program data storage 52, selectively outputs preview programinformation,describedlater,givenfromthepreviewprogram information storage 41 or reservation information, described later, given from the reservation information storage 43, or outputs a combination of the program data and the preview program information or the reservation information.

The preview program information is program information for the preview program. An example of the preview program information will be described later. Furthermore, the reservation information includes a channel on which a reserved program is broadcast, the title of the program, the time when the program starts, the time when the program ends, and the type of reservation (viewing or recording).

The information input unit 24 is composed of a remote controller, for example, and is used for viewing reservation and recording reservation. Note that a user performs an operation using the information input unit 24 while seeing a video displayed on a screen of the monitor 60.

The video/sound output unit 23 outputs a video signal and a sound signal on the basis of the program data, the preview program information, or the reservation information that is outputted from the synthesizer 22. The video signal is fed to the monitor 60, and the sound signal is fed to the speaker 61.

The preview program viewing determiner 31 determines whether or not the preview program is being viewed on the basis of the program information given from the receiver 21. Thepreviewprogram information extractor 32 extracts program information including preview program information from the broadcasting signal outputted from the receiver 21.

The preview program information storage 41 stores program information including preview program information corresponding to a predetermined time period extracted by the preview program information extractor 32. The preview program data storage 51 stores preview program data corresponding to a predetermined time period outputted from the receiver 21. The preview program data stored in the preview program data storage 51 is related to the preview program information stored in the preview program information storage 41.

The reservation enabled time setter 34 stores a reservation enabled time in the reservation enabled time storage 42 on the basis of the preview program information stored in the preview program information storage 41. Furthermore, the reservation enabled time setter 34 erases the preview program information stored in the preview program information storage 41 and the preview program data stored in the preview program data storage 51 when the current time is just after the reservation enabled time.

Note that the user can change the reservation enabled time stored in the reservation enabled time storage 42 using the information input unit 24.

The reservation enabled time determiner 35 determines whether or not the current time is before the reservation enabled time on the basis of the reservation enabled time stored in the reservation enabled time storage 42 and the current time measured by the timer 37.

The program reservation setter 33 sets the reservation of the mainview program on the basis of the operation of the information input unit 24 and the results of the determination by the reservation enabled time determiner 35, and gives the reservation information to the reservation information storage 43. The reservation information storage 43 stores the reservation information.

The program reservation executor 36 reserves the mainview program on the basis of the reservation information stored in there servation information storage 43 and the current time measured by the timer 37.

Specifically, the program reservation executor 36 controls the receiver 21 so as to tune in to the reserved mainview program when viewing reservation of the mainview program is executed. Thus, a video signal and a sound signal of the mainview program are outputted from the video/sound output unit 23, a video in the mainview program is displayed on the monitor 60, and a sound in the mainview program is outputted from the speaker 61.

Furthermore, the program reservation executor 36 controls the receiver 21 so as to tune in to the reserved mainview program when recording reservation of the mainview program is executed while controlling the recorded program data storage 52 so as to store the program data relating to the reserved mainview program. Thus, the recorded program data storage 52 stores the program data relating to the mainview program outputted from the receiver 21.

Alternatively, when viewing reservation and recording reservation of the mainview program are executed, the receiver 21 can acquire the content of the mainview program stored in the server in the broadcasting station 1.

### (2) Program information

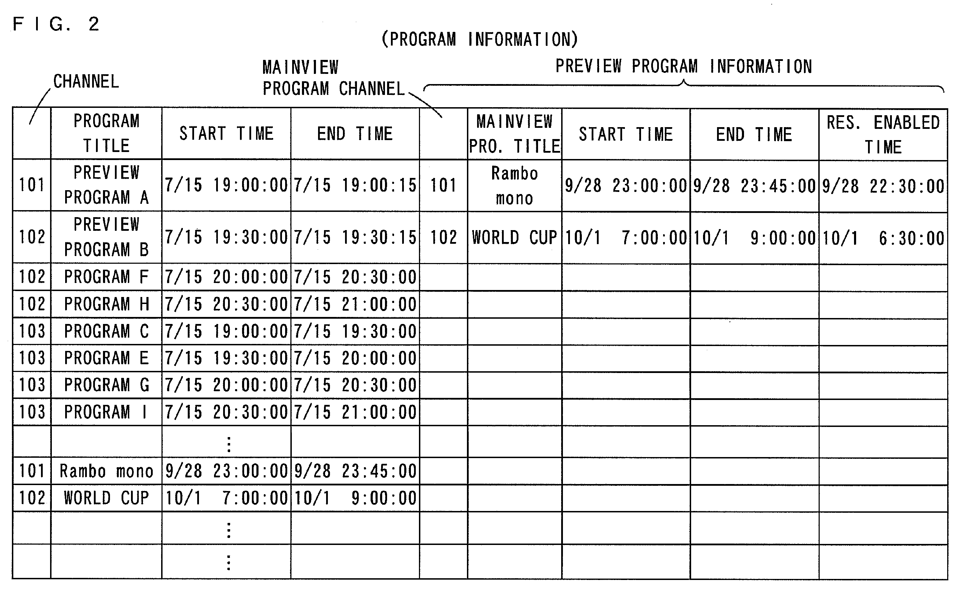

Fig.2 is a diagram showing an example of program information. As shown in Fig. 2, the program information includes a channel, a program title, a start time, an end time, a mainview program channel, a mainview program title, a start time, an end time, and a reservation enabled time.

The mainview program channel, the mainview program title, the start time, the end time, and the reservation enabled time in the program information correspond to preview program information.

For example, "Preview program A" on Channel "101" is broadcast for 15 seconds from 19:00 on July 15. This "Preview program A" preannounces and advertises a mainview program "Rambo mono" broadcast on Channel "101" from 23:00 to 23:45 on September 28. The reservation enabled time of the mainview program "Rambo mono" is set to 22:30 on September 28 thirty minutes before the start time. Note that the reservation enabled time of the mainview program may be set to the start time of the mainview program.

### (3) Operation of broadcasting receiving apparatus

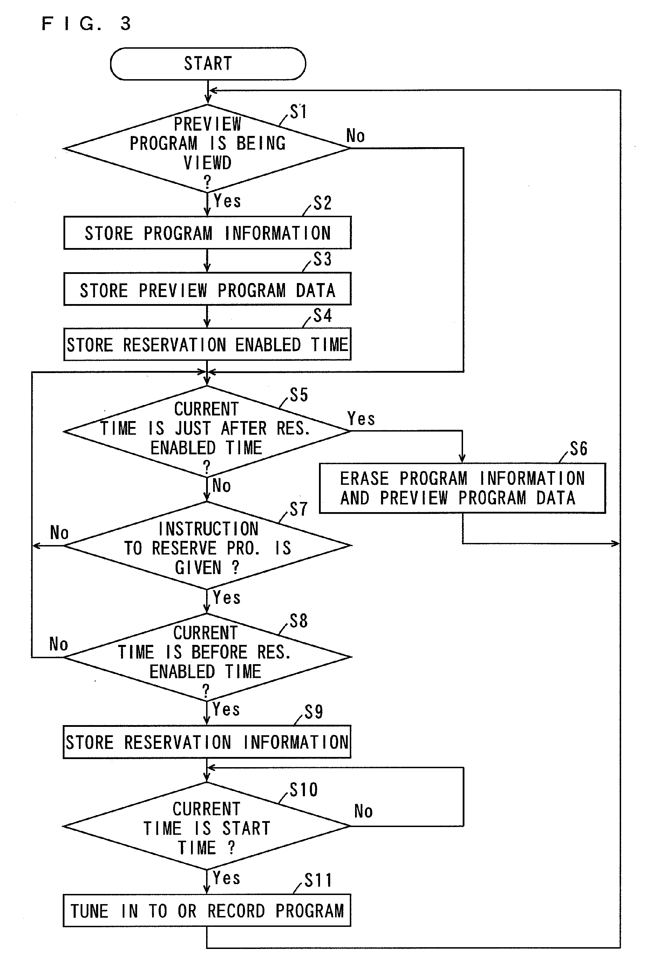

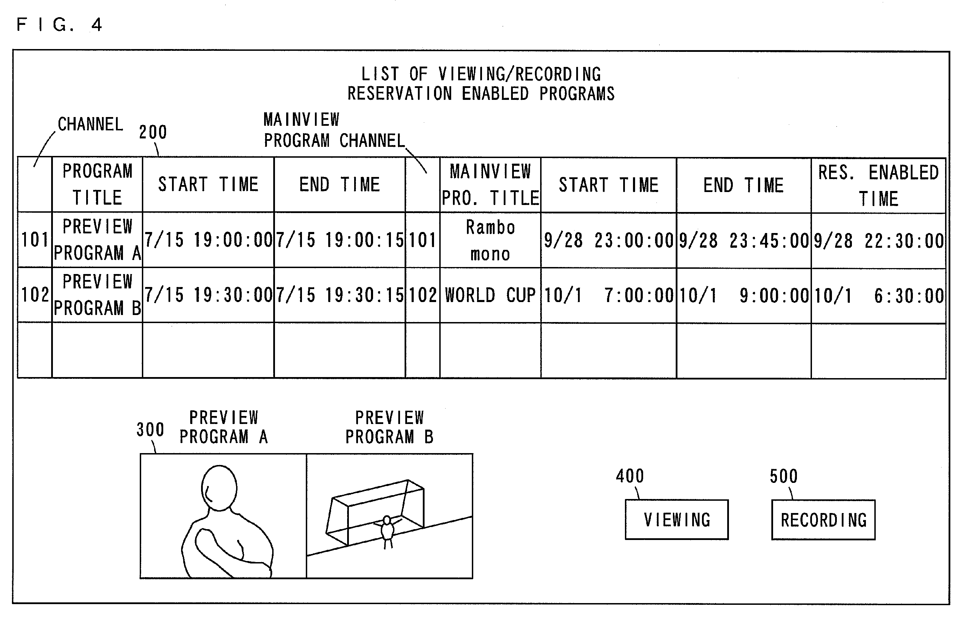

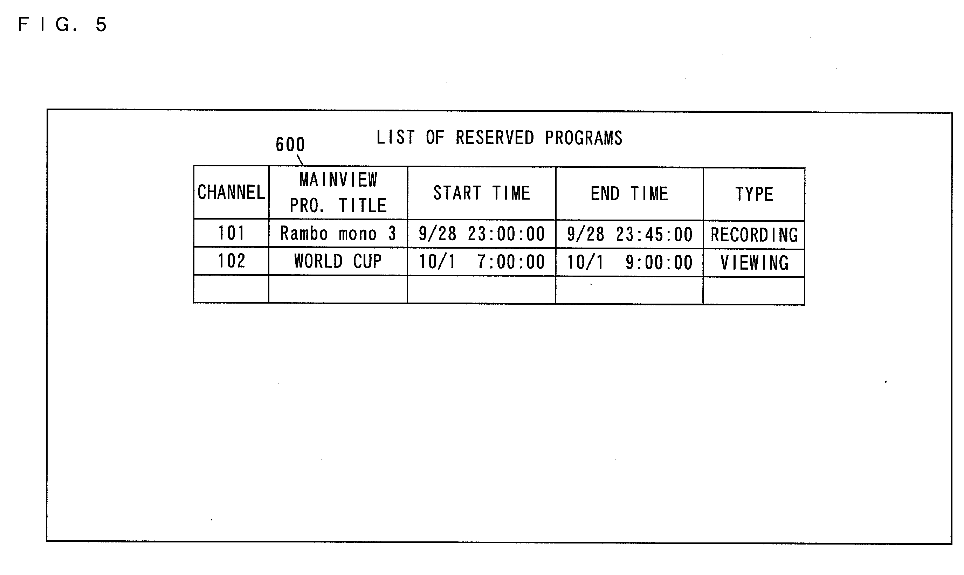

Referring now to Figs. 3 to 5, the operation of the broadcasting receiving apparatus 2 shown in Fig. 1 will be then described. Fig. 3 is a flow chart showing the operation of the broadcasting receiving apparatus 2 shown in Fig. 1. Fig. 4 is a diagram showing a list of viewing/recording reservation enabled programs displayed on the screen of the monitor 60. Fig. 5 is a diagram showing a list of reserved programs displayed on the screen of the monitor 60. The operation of the broadcasting receiving apparatus 2 is controlled by the controller 30 in accordance with a program.

First, the preview program viewing determiner 31 determines whether or not a user is viewing a preview program on the basis of program information given from the receiver 21 (step S1).

When the user is viewing the preview program, the preview program information extractor 32 extracts program information including preview program information from a broadcasting signal outputted from the receiver 21. The preview program information storage 41 stores the program information including the preview program information (step S2). The preview program data storage 51 stores preview program data outputted from the receiver 21 (step S3). Furthermore, the reservation enabled time setter 34 stores a preview enabled time included in the preview program information stored in the preview program information storage 41 in the reservation enabled time storage 42 (step S4).

Unless the user is viewing the preview program in the step S1, the procedure proceeds to the step S5.

Thereafter, the preview program viewing determiner 31 determines whether or not the current time measured by the timer 37 is just after the reservation enabled time stored in the reservation enabled time storage 42 (step S5).

Unless the current time is just after the reservation enabled time, the program reservation setter 33 determines whether or not the information input unit 24 gives an instruction to reserve a program (step S7).

In this case, the user can display a list of viewing/recording reservation enabled programs shown in Fig. 4 on the screen of the monitor 60 by operating the information input unit 24. The list of viewing/recording reservation enabled programs is displayed on the basis of the program information including the preview program information stored in the preview program information storage 41 and the preview program data stored in the preview program data storage 51.

As shown in Fig. 4, the list of viewing/recording reservation enabled programs includes a program information list 200 including preview program information, a thumbnail 300 of preview programs, a viewing button 400, and a recording button 500.

The user can select viewing reservation or recording reservation by selecting the viewing button 400 or the recording button 500 using the information input unit 24. The user can see a moving image or a still image of a preview program by the thumbnail 300 of preview programs. Furthermore, the user can select the preview program in the program information list 200 using the information input unit 24 to give an instruction to reserve a mainview program corresponding to the selected preview program.

When the instruction to reserve the program is given, the reservation enabled time determiner 35 determines whether or not the current time measured by the timer 37 is before the reservation enabled time stored in the reservation enabled time storage 42 (step S8).

When the current time is before the reservation enabled time, the program reservation setter 33 stores the reservation information inputted by operating the information input unit 24 in the reservation information storage 43 (step S9). This causes viewing or recording to be reserved.

In this case, the user can display a list of reserved programs shown in Fig. 5 on the screen of the monitor 60 by operating the information input unit 24. The list of reserved programs is displayed on the basis of the reservation information stored in the reservation information storage 43. As shown in Fig. 5, the list of reservedprograms includes a reservation information list 600. The reservation information list 600 includes a channel at which a reserved mainview program is broadcast, the title of the mainview program, the time when the mainview program starts, the time when the main view program ends, and the type of the reservation (viewing or recording).

There after, the program reservation executor 36 determines on the basis of the current time measured by the timer 37 and the reservation information stored in the reservation information storage 43 whether or not the current time has reached the time when the reserved mainview program starts (step S10). Unless the current time has reached the time when the mainview program starts, the program reservation executor 36 waits.

When the current time has reached the time when the mainview program starts, the program reservation executor 36 controls the receiver 21 so as to tune in to the reserved mainview program, or controls the receiver 21 so as to tune in to the reservedmainview program while controlling the recorded program data storage 52 so as to store program data relating to the mainview program, to record the mainview program (step S11). This causes a video in the reserved mainview program to be displayed on the monitor 60 while causing a sound in the reserved mainview program to be outputted from the speaker 61 or causing the reserved mainview program to be recorded. Thereafter, the procedure is returned to the step S1.

When the current time is just after the reservation enabled time in the step S5, the reservation enabled time setter 34 erases the program information including the preview program information stored in the preview program information storage 41 and the preview program data stored in the preview program data storage 51 (step S6). Thereafter, the procedure is returned to the step S1.

Unless the instruction to reserve the program is given in the step S7 and unless the current time is before the reservation enabled time in the step S8, the procedure is returned to the step S5.

### (4) Effects of embodiment

In the broadcasting receiving apparatus 2 according to the present embodiment, when the user is viewing the preview program, the program information including the preview program information is stored in the preview program data storage 51. The user grasps the contents of the mainview program by the preview program, it is possible to simply and reliably reserve viewing or recording of the mainview program by operating the information input unit 24 even if the preview program ends.

In this case, the program information including the preview program information stored in the preview program information storage 41 can be displayed on the screen of the monitor 60, the user can simply and reliably reserve viewing or recording of the mainview program.

Furthermore, the preview program data stored in the preview program data storage 51 can be thumbnailed on the screen of the monitor 60. Therefore, the user can simply and reliably reserve viewing or recording of the mainview program.

### (5) Another Embodiment

Although in the above-mentioned embodiment, the function of the controller 30 can be realized by the CPU and the program, each of the units in the controller 30 may be realized by hardware such as an electronic circuit.

### (6) Correspondences between constituent elements in claims and parts in embodiments

In the following paragraphs, non-limiting examples of correspondences between various elements recited in the claims below and those described above with respect to the embodiment of the present invention are explained.

In the above-mentioned embodiment, the receiver 21 is a data extractor, a tuner, and a content acquisition unit, the preview program information extractor 32 is an example of an information extractor, the preview program information storage 41 is an example of a program information storage, the video/sound output unit 23 is an example of a display controller and an output unit, and the program reservation setter 33 is an example of a reservation setter.

Furthermore, the preview program data storage 51 is an example of a first data storage, the reservation information storage 43 is an example of a reservation information storage, and the recorded program data storage 52 is an example of a second data storage.

Furthermore, the reservation enabled time setter 34 is an example of a time acquisition unit and an eraser, the reservation enabled time storage 42 is an example of a time storage, and the reservation enabled time is an example of a reservation enabled time.

### [Industrial Applicability]

The present invention is applicable to a broadcasting receiving apparatus that can reserve viewing or recording of a mainview program on the basis of a preview program.

## Claims

1. A broadcasting receiving apparatus that receives a broadcasting signal including program information relating to a mainview program preannounced by a preview program, comprising:
a tuner that tunes in to the preview program or the mainview program;
an information extractor that extracts program information relating to the mainview program from a broadcasting signal for the preview program while said tuner is tuning in to the preview program;
a program information storage that stores the program information extracted by said information extractor;
a display controller that displays the program information stored in said program information storage on a screen on the basis of an instruction from a user; and
a reservation setter that sets the reservation of the mainview program selected by the user on the basis of the program information displayed on the screen.

2. Thebroadcastingreceivingapparatusaccordingtoclaim 1, wherein
said display controller displays the program information stored in saidprogram information storage as a list on the screen, and
said reservation setter sets the reservation of the mainview program on the basis of the program information selected by the user from the program information displayed as a list on the screen.

3. Thebroadcastingreceivingapparatusaccordingtoclaim 1, further comprising
a data extractor that extracts program data including the content of the preview program from the broadcasting signal for the preview program, and
a first data storage that stores the program data extracted by said data extractor,
wherein said display controller displays the program data stored in said first data storage as a video of a still image or a moving image on the screen on the basis of the instruction from the user.

4. Thebroadcastingreceivingapparatusaccordingtoclaim 3, wherein said display controller displays a video in the preview program corresponding to a predetermined time period on the screen on the basis of the program data stored in said first data storage.

5. Thebroadcastingreceivingapparatusaccordingtoclaim 3, wherein said display controller thumbnails the video in the preview program on the screen on the basis of the program data stored in said first data storage.

6. Thebroadcastingreceivingapparatusaccordingtoclaim 1, further comprising
a reservation information storage that stores reservation information representing the contents of the reservation setting by said reservation setter,
wherein said display controller displays the reservation information stored in said reservation information storage on the screen on the basis of the instruction from the user.

7. Thebroadcastingreceivingapparatusaccordingtoclaim 1, wherein said tuner tunes in to the mainview program on the basis of the reservation setting by said reservation setter.

8. Thebroadcastingreceivingapparatusaccordingtoclaim 7, further comprising an output unit that outputs program data including the content of the mainview program tuned in to by said tuner.

9. Thebroadcastingreceivingapparatusaccordingtoclaim 7, further comprising a second data storage that stores program data including the content of the mainview program tuned in to by said tuner.

10. Thebroadcastingreceivingapparatusaccordingtoclaim 1, further comprising a content acquisition unit that is connected to a server storing the content of the mainviewprogram and acquires the content of the mainview program from said server on the basis of the reservation setting by said reservation setter.

11. Thebroadcastingreceivingapparatusaccordingtoclaim 1, wherein the program information relating to the main view program includes a reservation enabled time period for the mainview program, said broadcasting receiving apparatus further comprising
a time acquisition unit that acquires a reservation enabled time period from the program information extracted by said information extractor, and
a time storage that stores the reservation enabled time period acquired by said time acquisition unit,
wherein said reservation setter sets the reservation of the mainview program when an instruction to set the reservation of the mainview program by the user is given within the reservation enabled time period stored in said time storage.

12. Thebroadcastingreceivingapparatusaccordingtoclaim 11, further comprising an eraser that erases the program information stored in said program information storage when the current time is just after the reservation enabled time period stored in said time storage.
